# EUROPEAN PATENT SPECIFICATION

(11) **EP 4 537 066 B1**
(45) Date of publication and mention of the grant of the patent: **27.05.2026**
(21) Application number: 23751066.4
(22) Date of filing: 08.06.2023
(51) Int. Cl.: G01L 3/16, G01M 17/007

(54) **PORTABLE ON-VEHICLE DYNAMOMETER**
TRAGBARES DYNAMOMETER AN BORD EINES FAHRZEUGS
DYNAMOMÈTRE PORTABLE EMBARQUÉ

(30) Priority: 08.06.2022 IT 202200012197
(43) Date of publication of application: 16.04.2025
(73) Proprietor: MAGICMOTORSPORT S.r.l., 90047 Partinico (PA) (IT)
(72) Inventor: SKUTKIEWICZ, Bogdan Jan, 90049 Terrasini (PA) (IT)
(74) Representative: Valente Cioncoloni, Andrea
(86) International application number: PCT/IB2023/055928
(87) International publication number: WO 2023/238079

(56) References cited:
- CN-A- 112 254 975
- US-A- 5 629 476
- US-A1- 2018 095 007
- US-B1- 8 505 374

## Description

### Technical Field

The present invention finds application in the field of measuring instruments for vehicles and in particular relates to a portable on-vehicles dynamometer (POD) suitable to be coupled to an output shaft of a vehicle wheel for measuring the power transmitted by the engine.

### State of the art

Generally, engine performance testing is important in the development of engine and fuel technologies.

An engine or motor is a machine designed to convert a form of energy into mechanical one. Heat engines convert heat into work through various thermodynamic processes. Electric motors convert electrical energy into mechanical motion, air motors use compressed air, and so on. Many parameters influence the performance of an engine: the basic design of the engine, speed, torque and power, compression ratio, valve timing, ignition timing, fuel (for internal combustion engines). Proper engine tuning requires accurate measurements of torque, speed, temperature and fuel consumption as a function of throttle position.

The use of dynamometers to measure the performance of an engine is known in the automotive sector.

Briefly, a dynamometer is an instrument suitable to measure simultaneously the torque and rotational speed (RPM) of an engine, so that its instantaneous power may be calculated and usually displayed as kW or CV.

In addition to simple CV and torque measurements, dynamometers may be used as part of a test rig for a variety of engine development tasks, such as calibration of engine management controllers, detailed investigations of combustion behavior, and interaction of surfaces in relative motion (friction, lubrication, etc.).

Typically, a dynamometer is provided with a supporting frame or dynamometer bench suitable of supporting the entire vehicle and which is provided with one or more rotating drums upon which the wheels of the vehicle are positioned.

In this way, the engine power is transferred to the wheels of the vehicle and thus to the rotating drum of the dynamometer chassis.

The drum is connected to measuring instruments which measure, indirectly, the power supplied by the engine.

A first drawback of these solutions lies in the large dimensions which make the placement of the instrument complex, also because an appropriate stabilization of the whole structure is requested.

Secondly, the fact that the connection between the engine and the drum is made by the vehicle wheel, simply positioned on the drum, does not guarantee reliability of the measurement due to the inevitable slipping of the wheel, with the need to make consequent corrections to the measurement itself.

To obviate at least partially these drawbacks, solutions have been proposed characterized by smaller dimensions and greater reliability in the measurement.

In particular, the so-called PODs (Portable On-vheicle Dynamometer) have been created, i.e. portable instruments. of smaller size also characterized by the possibility of directly connecting the rotation shaft of the drum to the wheel hub, in order to avoid errors in the measurement caused by wheel slippage on the drum itself.

An example of POD is disclosed in US8505374, wherein the instrument comprises a compact casing which houses the drum and which is provided with rollers for its movement.

However, these instruments have proved to be improvable under various aspects, such as in particular in the possibility of movement and in the connection with the wheel hub, to compensate for possible inclinations of the axles and the camber angles. US2018/0095007 discloses a fixed dynamometer which connects to the wheel hub by means of a constant velocity joint.

However, this joint, while allowing a minimum adaptation between the rotation axis of the dynamometer drum and the vehicle wheel hub, has several limitations.

In particular, the used CV joint has an axial rigidity which does not allow to reach sufficiently high angles of inclination or to ensure correct, safe and easy fastening to the hub.

Last but not least, there are no systems that guarantee safety in the presence of failures that could lead to an angle greater than the maximum design angle.

Document D1: Patent Publication No. US 8,505,374 B1 (Paul N. ARSENAU, 13th August 2013) ("PORTABLE ON-VEHICLE DYNAMOMETER") discloses a portable on-vehicle dynamometer comprising a containment chassis, a drum rotatably housed in the containment chassis to rotate around a load shaft; a mechanical transmission adapted to connect the load shaft to the hub of a wheel of a vehicle being measured to transfer the motion of the vehicle engine to the drum. The mechanical transmission comprises a connection flange provided with a central rotation axis and suitable to be fixed stably but removably to the hub of the vehicle wheel.

However, D1 discloses a dynamometer involving a dual-arm stabilization system, which increases complexity, alignment time, and user effort.

Document D2: Patent Application Publication No. US 2018/0095007 A1 (Masao MIZUTA, 5th April 2018) ("VEHICLE TEST SYSTEM, METHOD FOR MOVING TEST VEHICLE AND SIMULATED WHEEL") discloses the use of a constant-velocity joint to enhance adaptability of the mechanical transmission to different output shafts.

However, D2 refers to standard constant-velocity joints which do not include axial travel-limiting mechanisms, nor are structurally designed for extreme elongation or compression cycles.

### Scope of the invention

The object of the present invention is to overcome the above drawbacks by providing a portable on-vehicle dynamometer characterized by high efficiency, relative cost effectiveness and reduced overall dimensions.

A particular object is to provide a portable on-vehicle dynamometer which allows to compensate for any type of inclination with which the axis of rotation of the wheel hub of the vehicle to which the instrument is connected is provided each time.

In particular, the portable on-vehicle dynamometer aims to allow a relatively wide range of the mutual inclination angle between the axis of rotation of the wheel hub of the vehicle and the axis of rotation of the drum of the dynamometer, always guaranteeing correct and easy fixing of the dynamometer to the hub and safety in the presence of faults which could lead to an angle of inclination greater than the maximum value of the design range.

A further object is to provide a portable on-vehicle dynamometer which is easily transportable and characterized by high stability during use.

These objects, as well as others which will become more apparent hereinafter, are achieved by a portable on-vehicle dynamometer which, according to claim 1, comprises a containment chassis, a drum rotatably housed in said chassis to rotate around a load shaft fastened with said chassis, mechanical transmission means adapted to connect said load shaft to the hub of a wheel of the vehicle being measured to transfer the motion of the vehicle engine to said drum.

The mechanical transmission means comprise a connecting flange provided with a central axis of rotation and suitable to be fixed stably but removably to the wheel hub of the vehicle and a CV joint adapted to connect said flange with one end of said load shaft. The CV joint is designed to allow the reciprocal angulation between said load shaft and the central rotation axis of said flange with respect to one or preferably two mutually orthogonal inclination planes, so as to recover the axial alignment between the load and the wheel hub in the presence of any camber and toe angle of the vehicle or any other type of inclination of the wheel with respect to the support surface.

Furthermore, the CV joint has a structure that may be extended along its axis to allow the fixing of the flange without losing the inclination properties and allowing the CV joint to maintain its constant velocity transmission power with any range of movement. Particularly advantageous embodiments of the invention are obtained according to the dependent claims.

### Brief disclosure of the drawings

Further features and advantages of the invention will become more apparent in the light of the detailed description of a preferred but not exclusive embodiment of a portable on-vehicle dynamometer, shown by way of non-limiting example with the aid of the attached drawings wherein:
**FIG. 1** is a front perspective view of the dynamometer;
**FIG. 2** is a rear perspective view of the dynamometer;

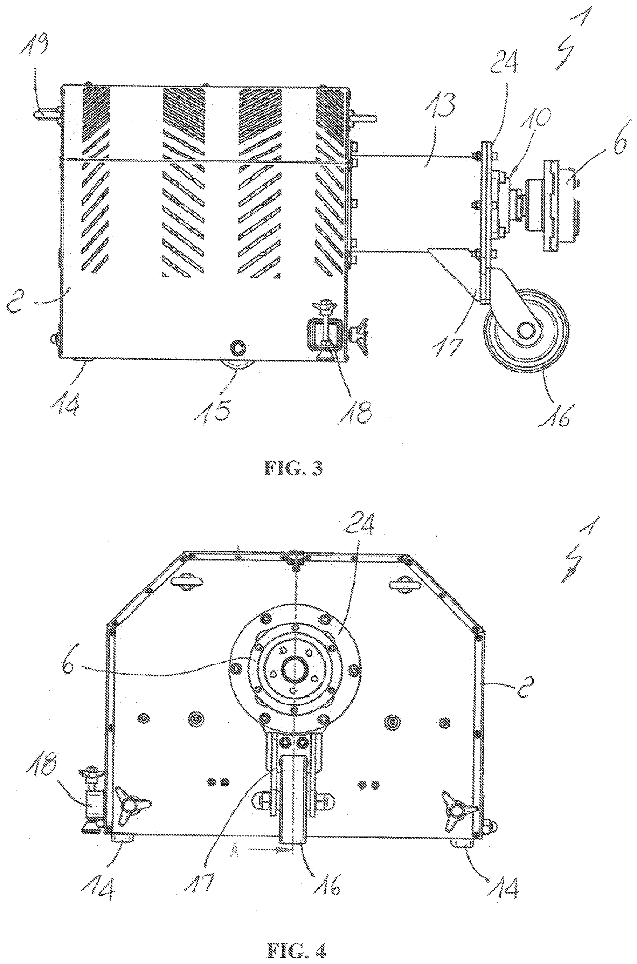

**FIG. 3** is a side view of the dynamometer;
**FIG. 4** is a front view of the dynamometer;
**FIG. 5** is a sectional side view of a possible configuration of a detail of the CV joint belonging to the dynamometer in two different operating conditions;
**FIG. 6** is a sectional side view of the dynamometer along the line A-A of Fig. 4 in a first operating condition;

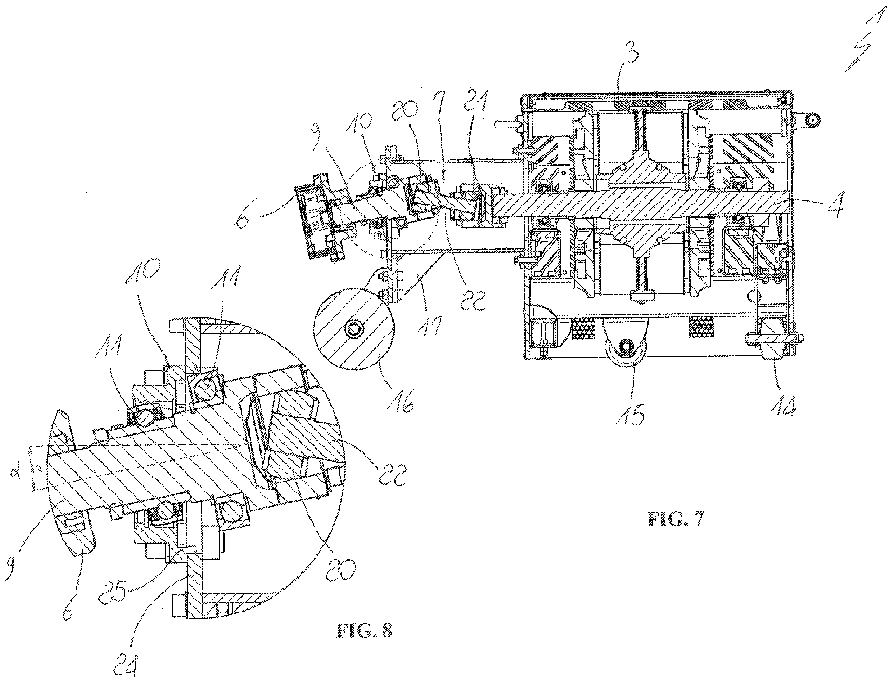

**FIG. 7** is a sectional side view of the dynamometer in a second operating condition;
**FIG. 8** is an enlarged view of a detail of Fig. 7;
**FIG. 9** is a schematic view of a measuring system including the dynamometer.

### Best modes of carrying out the invention

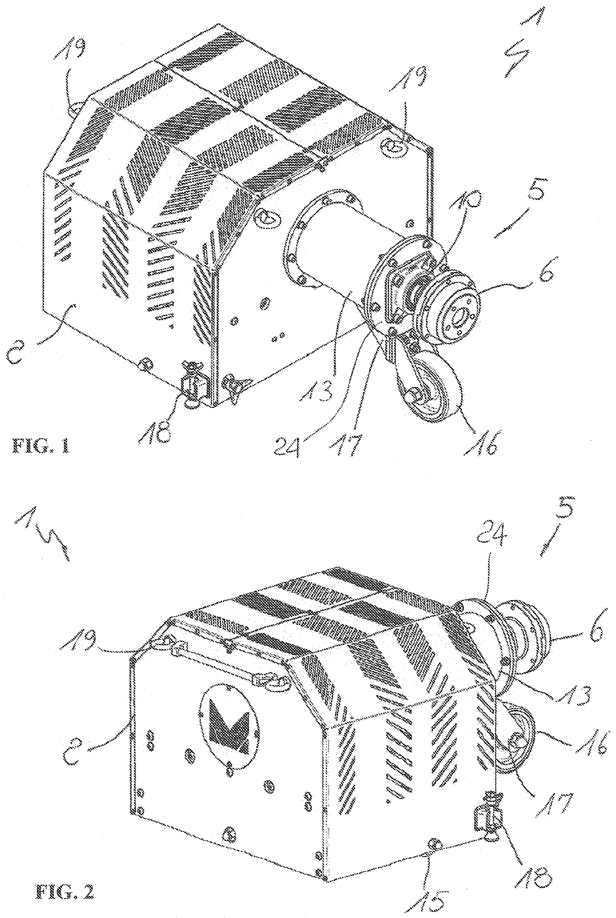

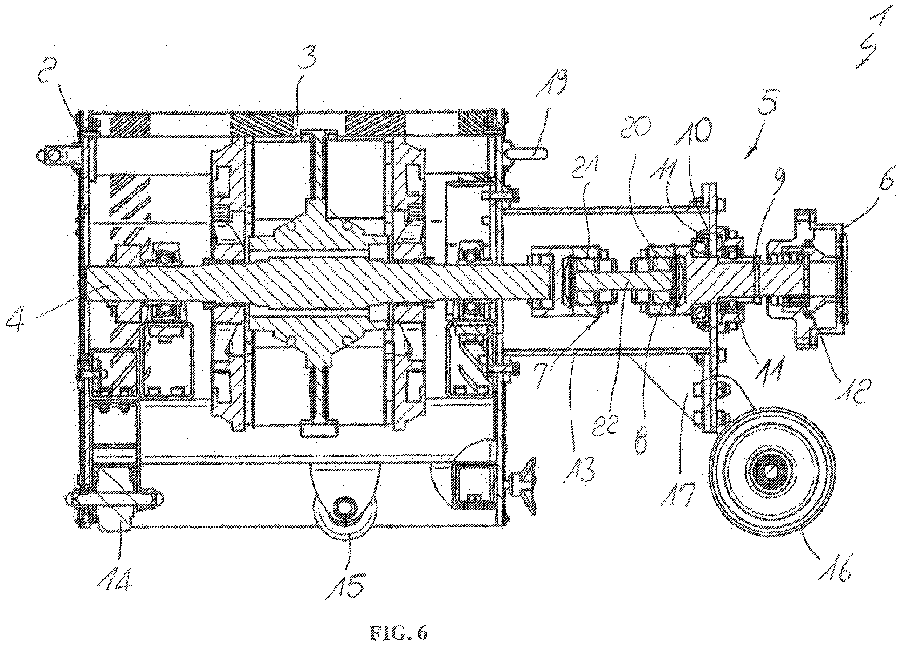

As shown in **Fig. 1****,** a portable on-vehicle dynamometer, hereinafter also briefly referred to as POD (*Portable On-vehicle Dynamometer*) and globally designated by **1,** comprises a containment chassis **2** of the transportable type which houses thereinside a drum **3** (shown in **Fig. 6**) rotatable inside the chassis **2** to rotate around a load shaft **4.**

The latter is provided with mechanical transmission means **5** adapted to connect one end of the load shaft **4** to the hub of a wheel of the vehicle being measured, not shown as of a per se known type, and to transfer the motion of the vehicle engine to the drum **3** and from this to suitable measuring means, also not shown since they are non-limiting for the present invention.

Without going into too much technical detail of the measuring means, according to a preferred but not exclusive embodiment, the POD **1** will be provided with an on-board eddy current brake with high torque and power, with a load sensor for measuring the torque of the retarder and with an incremental optical encoder to measure the rotations of the hub.

The mechanical transmission means **5** comprise, in turn, a connection flange **6** provided with a central axis of rotation and adapted to be fixed stably but removably to the wheel hub of the vehicle, for example by means of billet steel adapters which will allow to eliminate in fact the variables related to the specific type of wheels and tires from the equation of testing and tuning, in order to guarantee absolute accuracy and maximum repeatability of test data from one power test to another.

Again, the mechanical transmission means **5** will comprise a CV joint 7 adapted to connect the flange **6** with one end of the load shaft **4.**

The CV joint 7 is designed to allow the reciprocal angulation between the load shaft **4** and the central rotation axis of the flange **6** with respect to at least one plane of inclination.

Even more preferably, the CV joint **7** is designed to allow the mutual angular regulation between the load shaft **4** and the central rotation axis of the flange **6** with respect to at least two mutually perpendicular inclination planes.

Furthermore, the CV joint **7** is connected at one end to an articulated bearing **8** suitable to connect the CV joint **7** with the flange **6** to allow the latter to adapt to the natural camber and toe of the vehicle wheels.

In a particularly advantageous manner, the CV joint **7** has a structure which can be extended along its own axis.

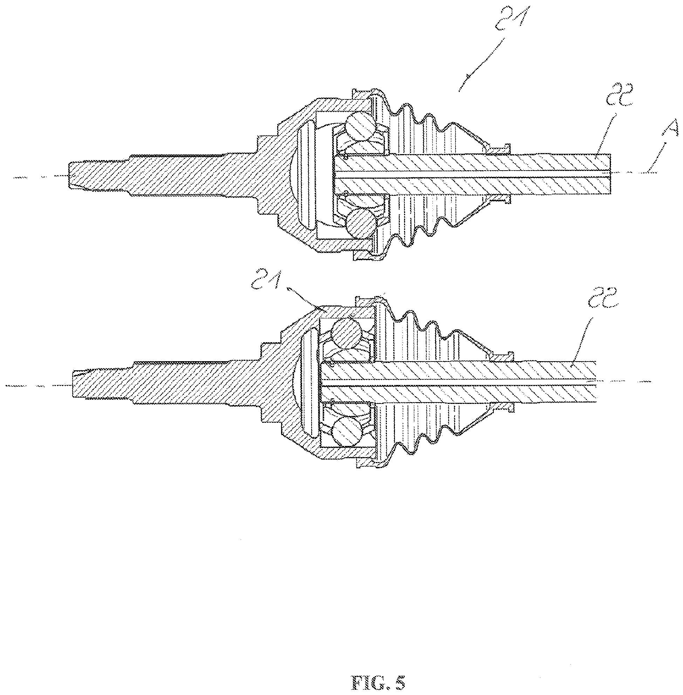

In particular, the CV joint **7** comprises a first end joint **20** located at the end of the load shaft **4** and a second end joint **21** located at the flange **6** and connected to the first end joint **20** by a connecting rod **22** which defines the aforesaid axis **A** of the CV joint 7. Conveniently, at least one of the end joints **20, 21** is an axial freedom o plunge joint, a possible configuration of which is illustrated in **Fig. 5** wherein a plunge joint is illustrated under two conditions which differ in that the end joint end is translated with respect to the connecting rod **22.**

Even more preferably, the CV joint **7** will be a double offset joint, i.e. provided with plunge joints **20, 21** at both ends.

The CV joint **7** is also fastened to a connecting shaft **9** with variable diameter suitable to connect one end with the flange **6.**

Furthermore, the CV joint **7** is connected at one end to an articulated bearing **10** adapted to connect it to the flange **6** in an adjustable manner.

In particular, the jointed bearing **10** constitutes a constraint, preferably but not necessarily of +-10° on said inclination planes, for the adjustment of the CV joint **7** with respect to the flange **6.**

Suitably, the articulated bearing **10** will be keyed above the above connecting shaft **9** and will be an angular ball bearing with double row of spheres **10** provided with two rows of spheres **11** defining respective rolling tracks mutually staggered along the axial direction.

In this way this bearing **10** will be adapted to support combined loads, i.e. radial and axial loads acting simultaneously.

The elongation capacity of the CV joint **7** allows the flange **6** to be firmly mounted on the bearing **10** without losing the inclination properties, locking it by means of a nut **23.**

The combination of the bearing **10** and the CV joint 7 and the lock by the nut **23** allows to have a safe and tilting system which allows to connect a car with a camber angle within 10° in a comfortable way.

The presence of the CV joint **7** with double offset will allow to maintain homokinetic power transmission throughout the entire range of motion.

The CV joint 7 is, in fact, designed to expand and contract, thus allowing the correct operation of the inclination of the flange **6** connected to the wheel hub.

The axial load carrying properties of the angular contact ball bearings **10** increases as the contact angle increases. The contact angle is defined as the angle between the line joining the contact points of the balls and the track in the radial plane, along which the combined load is transmitted from one track to the other, and a line perpendicular to the bearing axis.

This type of bearing is mounted at the end of the CV joint **7** before the outer flange **6,** which in turn will be mounted on a further ball bearing **12** located at the end of the connecting shaft **9.**

The bearing **10** will have a safety function to prevent, in the event of an excessive angle of the joint greater than a maximum angle value **α**, for example greater than 10°, that the flange of the joint **7** collides with the tubular element **13** fixed externally to the chassis **2** and which houses the CV joint **7.**

The whole load will be carried by the outer bearing cage **12.**

In particular, the tubular stiffening element **13** has a frontal support plate **24** for the jointed bearing **10** and having a passage **25** for the connecting shaft **9.**

The jointed bearing **10** will therefore be designed to interfere with the front support plate **24** at an angle of the connecting shaft **9** at least equal to the maximum inclination angle **α**.

The tubular element **13,** which extends frontally from the chassis **2** in a horizontal direction, will also have the function of stiffening the structure and houses the CV joint 7 thereinside.

To facilitate handling and lifting of the POD **1,** the chassis **2** will be provided with four wheels and in particular with two directional side wheels **14** placed inside the chassis, a central directional wheel **15** also positioned inside the chassis **2** and of larger dimensions with respect to the side wheels **14,** and a non-directional front wheel **16** placed outside the chassis **2** and connected by a support arm **17** to the tubular stiffening element **13.**

Operatively, the wheels represent the contact element between POD **1** and the ground and will preferably be wheels with high mechanical resistance to support the weight of the POD and the vehicle. In addition to this structural function, they also have the task of helping the user to move the POD **1** and therefore help him to align the tool with the wheel hub or reposition it in the warehouse after use.

According to a further aspect, the chassis **2** will also be provided with a single anti-torsion stiffening arm **18** having the aim of preventing the POD **1** from vibrating or being moved in any way due to the torque expressed by vehicles with particularly high torque at the wheels.

What has been described above represents the mechanical part of the POD, which can be implemented with further elements, even of a known type, such as for example one or more grip handles **19** to facilitate the transport of the POD, or internal mechanical and/or electromechanical components functional to the operation of the POD but which do not represent a limitation for the scope of the present invention.

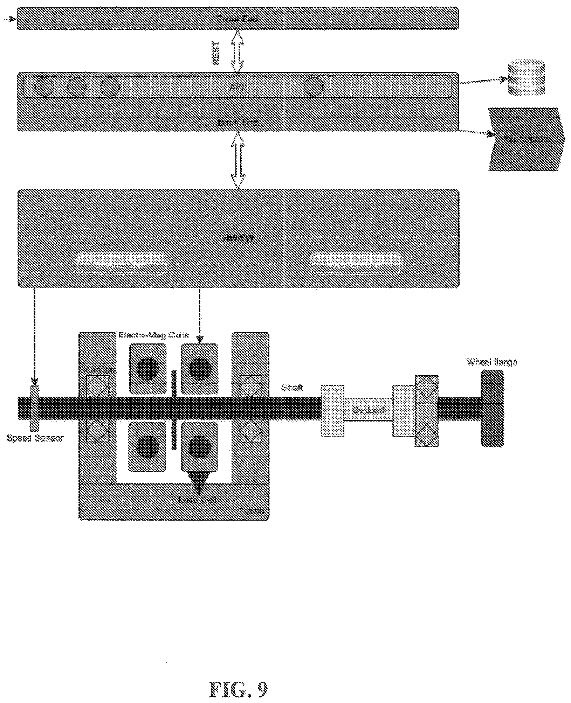

The **POD** will then be provided with an electrical/electronic subsystem, schematically shown in **Fig. 9****,** which comprises the following components:
Master Controller Unit (MCU): is a bridge between one or more Brake Controller Units and the Client Software Backend. It provides interoperability between different devices and adapters, control and routing of messages between adapters.

Brake Controller Unit (BCU): is the real time control system for the POD: it represents an electronic unit capable of controlling the load on the dynamometer (i.e. it controls the electric voltage/current at the resistance coils in the parasitic current dynamometer) and can measure or detect load and speed.

Electrical panel: receives external three-phase and single-phase power and supplies it to the boards and other subsystems.

Power: transforms the 220V to 24V power needed by the MCU.

Cabling System: comprises all electrical subsystem power and signal cables.

The POD will be completed by a software subsystem, and in particular by its own firmware, for the management and regulation of the measurement phases, according to schemes which may vary according to the needs and which do not fall within the scope of the present invention.

## Claims

1. A portable on-vehicle dynamometer, comprising:
- a containment chassis **(2);**
- a drum **(3)** rotatably housed in said containment chassis **(2)** to rotate around a load shaft **(4);**
- mechanical transmission means **(5)** adapted to connect said load shaft **(4)** to the hub of a wheel of the vehicle being measured to transfer the motion of the vehicle engine to said drum **(3);**
wherein said mechanical transmission means **(5)** comprise a connection flange **(6)** provided with a central axis of rotation and suitable to be fixed stably but removably to the hub of the vehicle wheel;
**characterized in that** said mechanical transmission means **(5)** comprise a constant velocity (CV) joint **(7)** having an axially extendable structure and adapted to connect said flange **(6)** with one end of said load shaft **(4),** said CVjoint **(7)** being designed to allow mutual angular regulation between said load shaft **(4)** and the central rotation axis of said flange **(6).**

2. Portable dynamometer according to claim 1, **characterized in that** said CV joint **(7)** is designed to allow reciprocal angulation between said load shaft **(4)** and the central rotation axis of said flange **(6)** with respect to at least two mutually perpendicular planes of inclination.

3. Portable dynamometer according to claim 1 or 2, **characterized in that** said CV joint **(7)** comprises an end plunge joint with axial freedom **(20)** in correspondence of at least one between said flange **(6)** and said end of said load shaft **(4).**

4. Portable dynamometer according to claim 1 or 2, **characterized in that** said CV joint **(7)** is provided with end plunge joints with axial freedom **(20, 21)** at both said flange **(6)** and said end of said load shaft **(4).**

5. Portable dynamometer according to any preceding claim, **characterized in that** said CV joint **(7)** is connected at one end to an articulated bearing **(10)** adapted to connect said CV joint **(7)** with said flange **(6)** in an adjustable manner.

6. Portable dynamometer according to claim 4, **characterized in that** said CV joint (7) is fastened to a variable diameter connection shaft **(9)** adapted to connect one end thereof with said flange **(6)** and on which said articulated bearing **(10)** is keyed.

7. Portable dynamometer according to claim 5, **characterized in that** said articulated bearing **(10)** is an angular bearing with double row of spheres **(10)** provided with two rows of spheres **(11)** mutually offset along the axial direction.

8. Portable dynamometer according to any preceding claim, **characterized in that** said chassis **(2)** comprises a tubular stiffening element **(13)** which extends frontally therefrom and houses said CV joint **(7)** thereinside.

9. Portable dynamometer according to claim 8, **characterized in that** said tubular stiffening element **(13)** has a front support plate **(24)** for said articulated bearing **(10)** and having a passage **(25)** for said connecting shaft **(9).**

10. Portable dynamometer according to claim 2 and any claim from 5 to 9, **characterized in that** said articulated bearing **(10)** represents a limit for the inclination of said CV joint (7) with respect to said flange **(6)** on said inclination planes to determine a maximum angle of inclination (**α**).

11. Portable dynamometer according to claim 10, **characterized in that** said maximum inclination angle (**α**) is equal to +/- 10° on said inclination planes.

12. Portable dynamometer according to claim 10 or 11, **characterized in that** said articulated bearing **(10)** is designed to interfere with said front support plate **(24)** at an angle of said connection shaft **(9)** at least equal to said maximum inclination angle (**α**).

13. Portable dynamometer according to any preceding claim, **characterized in that** said containment chassis **(2)** is provided with wheels for its movement on a plane.

14. Portable dynamometer according to claim 13, **characterized in that** said containment chassis **(2)** comprises two directional side wheels **(14)** and a central directional wheel **(15)** adapted to facilitate the movement of said containment chassis **(2)** and a non-directional front wheel **(16)** placed externally to said containment chassis **(2).**

15. Portable dynamometer according to claims 8 and 14, **characterized in that** said front wheel **(16)** is constrained to said tubular stiffening element **(13).**

16. Portable dynamometer according to any preceding claim, **characterized in that** said containment chassis **(2)** is provided with an anti-torsion stiffening arm **(18).**

## Patentansprüche

1. Tragbarer fahrzeuggebundener Leistungsprüfstand, umfassend:
- ein Aufnahmegehäuse (2);
- eine Trommel (3), die drehbar in dem Aufnahmegehäuse (2) gelagert ist, um um eine Lastwelle (4) zu rotieren;
- mechanische Übertragungsmittel (5), die dazu eingerichtet sind, die Lastwelle (4) mit der Nabe eines Rades des zu messenden Fahrzeugs zu verbinden, um die Bewegung des Fahrzeugmotors auf die Trommel (3) zu übertragen;
wobei die mechanischen Übertragungsmittel (5) einen Anschlussflansch (6) umfassen, der mit einer zentralen Rotationsachse versehen und dazu geeignet ist, stabil, aber abnehmbar an der Nabe des Fahrzeugrades befestigt zu werden;
**dadurch gekennzeichnet, dass** die mechanischen Übertragungsmittel (5) ein Gleichlaufgelenk (CV-Gelenk) (7) umfassen, das eine axial ausziehbare Struktur aufweist und dazu eingerichtet ist, den Flansch (6) mit einem Ende der Lastwelle (4) zu verbinden, wobei das Gleichlaufgelenk (7) so ausgelegt ist, dass es eine gegenseitige Winkeleinstellung zwischen der Lastwelle (4) und der zentralen Rotationsachse des Flansches (6) ermöglicht.

2. Tragbarer Leistungsprüfstand nach Anspruch 1, **dadurch gekennzeichnet, dass** das Gleichlaufgelenk (7) so ausgelegt ist, dass es eine wechselseitige Abwinkelung zwischen der Lastwelle (4) und der zentralen Rotationsachse des Flansches (6) in Bezug auf mindestens zwei zueinander senkrechte Neigungsebenen ermöglicht.

3. Tragbarer Leistungsprüfstand nach Anspruch 1 oder 2, **dadurch gekennzeichnet, dass** das Gleichlaufgelenk (7) an mindestens einer Stelle zwischen dem Flansch (6) und dem Ende der Lastwelle (4) ein Verschiebegelenk mit axialem Freiheitsgrad (20) umfasst.

4. Tragbarer Leistungsprüfstand nach Anspruch 1 oder 2, **dadurch gekennzeichnet, dass** das Gleichlaufgelenk (7) sowohl am Flansch (6) als auch am Ende der Lastwelle (4) mit Verschiebegelenken mit axialem Freiheitsgrad (20, 21) versehen ist.

5. Tragbarer Leistungsprüfstand nach einem der vorhergehenden Ansprüche, **dadurch gekennzeichnet, dass** das Gleichlaufgelenk (7) an einem Ende mit einem Gelenklager (10) verbunden ist, das dazu eingerichtet ist, das Gleichlaufgelenk (7) mit dem Flansch (6) verstellbar zu verbinden.

6. Tragbarer Leistungsprüfstand nach Anspruch 4, **dadurch gekennzeichnet, dass** das Gleichlaufgelenk (7) an einer Verbindungswelle mit variablem Durchmesser (9) befestigt ist, die dazu eingerichtet ist, ein Ende davon mit dem Flansch (6) zu verbinden, und auf der das Gelenklager (10) aufgekeilt ist.

7. Tragbarer Leistungsprüfstand nach Anspruch 5, **dadurch gekennzeichnet, dass** das Gelenklager (10) ein Schrägkugellager mit doppelter Kugelreihe (10) ist, das mit zwei in axialer Richtung zueinander versetzten Kugelreihen (11) versehen ist.

8. Tragbarer Leistungsprüfstand nach einem der vorhergehenden Ansprüche, **dadurch gekennzeichnet, dass** das Gehäuse (2) ein rohrförmiges Versteifungselement (13) umfasst, das sich stirnseitig von diesem erstreckt und das Gleichlaufgelenk (7) in seinem Inneren aufnimmt.

9. Tragbarer Leistungsprüfstand nach Anspruch 8, **dadurch gekennzeichnet, dass** das rohrförmige Versteifungselement (13) eine vordere Stützplatte (24) für das Gelenklager (10) aufweist und einen Durchgang (25) für die Verbindungswelle (9) besitzt.

10. Tragbarer Leistungsprüfstand nach Anspruch 2 und einem der Ansprüche 5 bis 9, **dadurch gekennzeichnet, dass** das Gelenklager (10) einen Anschlag für die Neigung des Gleichlaufgelenks (7) in Bezug auf den Flansch (6) in den Neigungsebenen darstellt, um einen maximalen Neigungswinkel (a) zu bestimmen.

11. Tragbarer Leistungsprüfstand nach Anspruch 10, **dadurch gekennzeichnet, dass** der maximale Neigungswinkel (a) in den Neigungsebenen gleich +/- 10° ist.

12. Tragbarer Leistungsprüfstand nach Anspruch 10 oder 11, **dadurch gekennzeichnet, dass** das Gelenklager (10) so ausgelegt ist, dass es bei einem Winkel der Verbindungswelle (9), der mindestens dem maximalen Neigungswinkel (a) entspricht, mit der vorderen Stützplatte (24) in Interferenz tritt.

13. Tragbarer Leistungsprüfstand nach einem der vorhergehenden Ansprüche, **dadurch gekennzeichnet, dass** das Aufnahmegehäuse (2) mit Rädern für seine Bewegung auf einer Ebene versehen ist.

14. Tragbarer Leistungsprüfstand nach Anspruch 13, **dadurch gekennzeichnet, dass** das Aufnahmegehäuse (2) zwei lenkbare Seitenräder (14) und ein zentrales lenkbares Rad (15), die dazu eingerichtet sind, die Bewegung des Aufnahmegehäuses (2) zu erleichtern, sowie ein nicht lenkbares Vorderrad (16), das außerhalb des Aufnahmegehäuses (2) angeordnet ist, umfasst.

15. Tragbarer Leistungsprüfstand nach den Ansprüchen 8 und 14, **dadurch gekennzeichnet, dass** das Vorderrad (16) an dem rohrförmigen Versteifungselement (13) zwangsgeführt ist.

16. Tragbarer Leistungsprüfstand nach einem der vorhergehenden Ansprüche, **dadurch gekennzeichnet, dass** das Aufnahmegehäuse (2) mit einem Antitorsions-Versteifungsarm (18) versehen ist.

## Revendications

1. Un banc de puissance mobile à fixer sur le véhicule, comprenant :
- un châssis de support (2) ;
- un tambour (3) monté de manière rotative dans ledit châssis de support (2) afin de tourner autour d'un arbre de charge (4) ;
- des éléments de transmission mécaniques (5) adaptés pour relier ledit arbre de charge (4) au moyeu d'une roue du véhicule à mesurer afin de transférer le mouvement du moteur du véhicule audit tambour (3) ;
dans lequel lesdits éléments de transmission mécaniques (5) comprennent une bride de raccordement (6) pourvue d'un axe de rotation central et adaptée pour être fixée de manière stable, mais amovible au moyeu de la roue du véhicule ;
**caractérisé en ce que** lesdits éléments de transmission mécaniques (5) comprennent un joint de transmission (7) présentant une structure extensible sur le plan axial et adapté pour relier ladite bride (6) à une extrémité dudit arbre de charge (4), ledit joint de transmission (7) étant conçu pour permettre un réglage angulaire réciproque entre ledit arbre de charge (4) et l'axe de rotation central de ladite bride (6).

2. Banc de puissance mobile selon la revendication 1, **caractérisé en ce que** ledit joint de transmission (7) est conçu pour permettre une angulation réciproque entre ledit arbre de charge (4) et l'axe de rotation central de ladite bride (6) par rapport à au moins deux plans d'inclinaison réciproquement perpendiculaires.

3. Banc de puissance mobile selon la revendication 1 ou 2, **caractérisé en ce que** ledit joint de transmission (7) comprend un joint coulissant d'extrémité à liberté axiale (20) situé au niveau d'au moins l'un des éléments parmi ladite bride (6) et ladite extrémité dudit arbre de charge (4).

4. Banc de puissance mobile selon la revendication 1 ou 2, **caractérisé en ce que** ledit joint de transmission (7) est muni de joints coulissants d'extrémité à liberté axiale (20, 21) tant au niveau de ladite bride (6) qu'au niveau de ladite extrémité dudit arbre de charge (4).

5. Banc de puissance mobile selon toute revendication précédente, **caractérisé en ce que** ledit joint de transmission (7) est relié à une extrémité à un palier articulé (10) conçu pour relier ledit joint de transmission (7) à ladite bride (6) de manière réglable.

6. Banc de puissance mobile selon la revendication 4, **caractérisé en ce que** ledit joint de transmission (7) est fixé à un arbre de raccordement à diamètre variable (9) conçu pour relier l'une de ses extrémités à ladite bride (6) et sur lequel ledit palier articulé (10) est claveté.

7. Banc de puissance mobile selon la revendication 5, **caractérisé en ce que** ledit palier articulé (10) est un palier angulaire à double rangée de billes (10) comprenant deux rangées de billes (11) décalées l'une par rapport à l'autre dans la direction axiale.

8. Banc de puissance mobile selon toute revendication précédente, **caractérisé en ce que** ledit châssis (2) comprend un élément de raidissement tubulaire (13) qui s'étend vers l'avant à partir de celui-ci et abrite ledit joint de transmission (7) de manière interne.

9. Banc de puissance mobile selon la revendication 8, **caractérisé en ce que** ledit élément de raidissement tubulaire (13) comporte une plaque d'appui avant (24) destinée audit palier articulé (10) et présentant un passage (25) pour ledit arbre de raccordement (9).

10. Banc de puissance mobile selon la revendication 2 et toute revendication de 5 à 9, **caractérisé en ce que** ledit palier articulé (10) définit une limite d'inclinaison dudit joint de transmission (7) par rapport à ladite bride (6) sur lesdits plans d'inclinaison, afin de déterminer un angle d'inclinaison maximal (a).

11. Banc de puissance mobile selon la revendication 10, **caractérisé en ce que** ledit angle d'inclinaison maximal (a) est égal à +/- 10° sur lesdits plans d'inclinaison.

12. Banc de puissance mobile selon la revendication 10 ou 11, **caractérisé en ce que** ledit palier articulé (10) est conçu pour s'engager avec ladite plaque d'appui avant (24) selon un angle de l'arbre de raccordement (9) au moins égal audit angle d'inclinaison maximal (a).

13. Banc de puissance mobile selon toute revendication précédente, **caractérisé en ce que** ledit châssis de support (2) est muni de roues permettant son déplacement sur un plan.

14. Banc de puissance mobile selon la revendication 13, **caractérisé en ce que** ledit châssis de support (2) comprend deux roues latérales directionnelles (14) et une roue centrale directionnelle (15) destinées à faciliter le déplacement dudit châssis de support (2), ainsi qu'une roue avant non directionnelle (16) placée à l'extérieur dudit châssis de support (2).

15. Banc de puissance mobile selon les revendications 8 et 14, **caractérisé en ce que** ladite roue avant (16) est fixée audit élément de raidissement tubulaire (13).

16. Banc de puissance mobile selon toute revendication précédente, **caractérisé en ce que** ledit châssis de support (2) est muni d'un bras de raidissement anti-torsion (18).
